# EUROPEAN PATENT SPECIFICATION

(11) **EP 3 090 086 B1**
(45) Date of publication and mention of the grant of the patent: **01.11.2023**
(21) Application number: 13818231.6
(22) Date of filing: 30.12.2013
(51) Int. Cl.: D06F 39/00, A47L 15/42, D06F 39/08, D06F 39/10

(54) **A METHOD FOR REUSING WATER IN A WATER BEARING MACHINE AND WATER BEARING MACHINE**
VERFAHREN ZUR WIEDERVERWENDUNG VON WASSER IN EINER WASSERFÜHRENDES MASCHINE UND WASSERFÜHRENDE MASCHINE
PROCÉDÉ DE RÉUTILISATION D'EAU DANS UNE MACHINE CONTENANT DE L'EAU ET MACHINE CONTENANT DE L'EAU

(43) Date of publication of application: 09.11.2016
(73) Proprietor: Electrolux Appliances Aktiebolag, 105 45 Stockholm (SE)
(72) Inventor: ZATTIN, Andrea, I-33080 Porcia (PN) (IT); CELOTTO, Monica, I-33080 Porcia (PN) (IT); TRIVILLIN, Fiorella, I-33080 Porcia (PN) (IT)
(74) Representative: Electrolux Group Patents
(86) International application number: PCT/EP2013/078102
(87) International publication number: WO 2015/101381

(56) References cited:
- EP-A2- 1 944 403
- EP-B1- 1 944 403
- WO-A1-2011/098815
- WO-A1-2011/098815
- WO-A1-2012/167545
- WO-A1-2012/167545
- JP-A- 2001 120 890
- JP-A- 2001 120 890
- JP-A- 2002 119 794
- JP-A- 2002 119 794
- US-A- 4 144 093
- US-A- 4 144 093
- US-A1- 2013 167 882
- US-A1- 2013 167 882

## Description

The present invention relates to a method for reusing water in a water bearing machine, in particular a laundry treating machine or dishwasher. Further, the present invention relates to a water bearing machine, in particular a laundry treating machine or dishwasher.

The awareness of users of water bearing machines to environmental problems is increasing. Further, in several countries there is a strong restriction of the water consumption. With regard to washing machines, such as a laundry washing machine or a dishwasher, the water consumption is decreasing over years. Now the water consumption of washing machines is a result of the machine architecture, the type of washing cycle and the amount of load. The role of the water during the washing phase is crucial. The decrease of the water amount during the washing cycle could give beneficial effects on energy consumption, but worsen the washing results and the quality of rinsing. The effort has been focused to obtain a good compromise between the washing results, i.e. by increasing of cycle duration and/or by improving mechanical action, on the one hand and water consumption on the other hand. All the developments up to now resulted in saving water, but a further significant decrease of the fresh water consumption is hardly possible without conceptual changes of the washing cycle, if rinsing performances are not to be compromised. To reduce strongly fresh water consumption, water reuse or purification is required. Considering the washing cycle structure and the amount of water used in each washing cycle phase, the rinse seems the most promising area to be explored due to the high amount of water used in it.

Purification and reuse of rinse water during the same washing cycle or in a subsequent washing cycle could provide fresh water saving in the order of about 25% to 500. Said water saving depends on the technology used and water quality required. A similar approach could be extended also to dishwasher machines.

EP 1 944 403 A2 discloses a water reuse method in a cleaning device and washing machine. The method includes a surfactant adsorption treatment step in order to adsorb and remove surfactant from cleaning water and rinse water, so that the cleaning water and rinse water can be reused. Anion and/or cation exchangers form an adsorption material. Said adsorption material can easily be regenerated only by exposing said adsorption material to an electrolytic solution. However, even if the anion and/or cation exchangers are periodically regenerated, their adsorption efficiency is progressively lost and the anion and/or cation exchangers have to be substituted with new ones.

US4144093 describes a method for the machine washing of soiled solid materials with a washing solution prepared from hard water in hard water areas, in which the washing solution is passed through a filter containing resin during the course of the washing operation. The filter is maintained separate and spaced from the washing area. A cation exchange resin may be contained in a filter of the whirlpool type, so that the particles are maintained in aqueous suspension without coming into contact with the materials being washed, or it may be contained as a unitary porous lining of a filter.

US2013/167882 discloses a method for the treatment of polymeric particles recovered after use in cleaning processes for soiled substrates, the method comprising treating the particles with a particle cleaning agent.

WO2011/098815 discloses an apparatus and method for use in the cleaning of soiled substrates. The method involves cleaning the soiled substrate by treatment of the moistened substrate with a formulation comprising solid particulate cleaning material and wash water, the method being carried out using the apparatus of the invention. The apparatus and method find particular application in the cleaning of textile fabrics.

EP1944403 discloses a water reuse method in which a surfactant is easily removed from surfactant-including for-treatment water in a cleaning device, whereby water can be reused, and an adsorbent can easily be regenerated only by exposing the adsorbent to an electrolytic solution, and a washing machine including the function.

JP2001120890 discloses a washing machine comprising a coagulation device for coagulating a contaminant in washing drain water and a first filter device for removing the resulting coagulation, which are provided on a washing drain water passage, and an adsorptive device provided on the downstream of the first filter device.

JP2002119794 discloses a washing machine capable of rapidly purifying washing water after use by promoting flocculation of pollutants containing surfactant.

WO2012/167545 discloses a solid particle for washing and washing method using the same are provided. The solid particle is a polymer solid particle, which is characterized in that there are opening pores distributing on the solid particle surface. The washing method using the said particle is also provided, which comprises steps of separating the articles to be washed with the solid particles, rinsing the articles to be washed and drying the articles to be washed.

It is an object of the present invention to provide an improved method and device for reusing water in a water bearing machine.

The invention is defined in the independent claims. Particular embodiments are set out in the dependent claims.

The object of the present invention is achieved by the method according to claim 1.

According to the present invention the adsorbent medium includes at least one synthetic resin of a polymeric type.

The main idea of the present invention is the treatment of the water by the re-generable synthetic resin of the polymeric type. Said re-generable synthetic resin of the polymeric type need not be substituted. The present invention allows water saving in the range of 25% to 30% per washing cycle, wherein the calculation bases on a front load washing machine for a common cotton cycle with one main washing phase and two rinsing phases.

Preferably, the polymeric structure of the synthetic resin is provided without any functional chemical group. By this, there is no ionic-type adsorption of surfactants as in the prior art.

For example, the synthetic resin bases on cross-linked polystyrene and/or cross-linked polyacrylates.

The surfactant adsorption treatment is applied to rinse water of the water bearing machine.

Further, the regenerant solution may include a soda solution, an acetone solution and/or an alcoholic solution.

Moreover, the regenerant solution may be provided in liquid, powder or tablet form.

Advantageously, the regenerant solution is soluble in water.

Preferably, the surfactant adsorption treatment of the water is finished, when the quality of said water fits the requirements of a predetermined standard.

In particular, the surfactant adsorption treatment of the water is performed continuously during the recirculation of said water.

Furthermore, at least a part of the treated water is stored or buffered after the surfactant adsorption treatment.

Preferably, the synthetic resin is provided as a plurality of beads or particles.

For example, the beads or particles have diameters between 50 µm and 1500 µm, wherein preferably beads or particles of different diameters are used.

Further, the synthetic resin may have a surface area between 100 m²/g and 1200 m²/g.

A network of the synthetic resin is provided with at least one functional chemical groups.

The network of the synthetic resin is provided with at least one amine functional group.

The object of the present invention is further achieved by the water bearing machine according to claim 5.

According to the present invention the adsorbent medium includes at least one synthetic resin of a polymeric type.

The main idea of the present invention is the treatment of the water by the re-generable synthetic resin of the polymeric type. It is not necessary to substitute the re-generable synthetic resin of the polymeric type. The water bearing machine is able to perform continuous rinse water purification during the recirculation circuit.

Preferably, the polymeric structure of the synthetic resin is provided without any functional chemical group.

For example, the synthetic resin bases on cross-linked polystyrene and/or cross-linked polyacrylates.

The recirculation circuit with the surfactant adsorption treatment device is provided for rinse water.

Moreover, the regenerant solution includes a soda solution, an acetone solution and/or an alcoholic solution.

For example, the regenerant solution is provided in liquid, powder or tablet form.

Advantageously, the regenerant solution is soluble in water.

According to a further development of the present invention, the water bearing machine comprises a water storage tank for storing or buffering the water treated by the surfactant adsorption treatment device.

In particular, the surfactant adsorption treatment device includes at least one resin cartridge.

For example, the resin cartridge has a cylindrical shape.

In one embodiment, the resin cartridge is preferably arranged in a top portion of the water bearing machine.

Further, the recirculation circuit may include at least one two-ways valve for bypassing the surfactant adsorption treatment device.

In a similar way, the recirculation circuit may include at least one further two-ways valve for bypassing the water storage tank.

In particular, the water bearing machine is provided for the method mentioned above.

Further, the present invention relates to the use of at least one synthetic resin of a polymeric type as an adsorbent medium for a surfactant adsorption treatment of water during a recirculation of the water, so that contaminants of the water are adsorbed by said adsorbent medium, wherein a regeneration phase is performed after a time period, in which regeneration phase the adsorbent medium is regenerated by a regenerant solution.

Synthetic resins of the polymeric type are available on the market for different purposes. The names of some commercial products are "Lewatit", "Diaion", "Sepabeds", "Dowex", "Optipore" and "Amberlite".

The use of the at least one synthetic resin is provided for the method and/or the water bearing machine mentioned above.

At last, the present invention relates to a computer program product stored on a computer usable medium, comprising computer readable program means for causing a computer to perform the method mentioned above.

Novel and inventive features believed to be the characteristic of the present invention are set forth in the appended claims.

The invention will be described in further detail with reference to the drawings, in which
- FIG 1: illustrates a schematic flow chart diagram of a washing cycle according to an embodiment of the present invention,
- FIG 2: illustrates a schematic flow chart diagram of a washing cycle according to a further embodiment of the present invention further,
- FIG 3: illustrates a schematic circuit diagram of a washing machine according to a first embodiment of the present invention,
- FIG 4: illustrates a schematic circuit diagram of a washing machine according to a second embodiment of the present invention,
- FIG 5: illustrates a schematic circuit diagram of a washing machine according to a third embodiment of the present invention,
- FIG 6: illustrates a schematic circuit diagram of a washing machine according to a fourth embodiment of the present invention,
- FIG 7: illustrates a detailed flow chart diagram of a washing cycle according to a first embodiment of the present invention,
- FIG 8: illustrates a detailed flow chart diagram of a washing cycle according to a second embodiment of the present invention, and
- FIG 9: illustrates a detailed flow chart diagram of a washing cycle according to a third embodiment of the present invention.

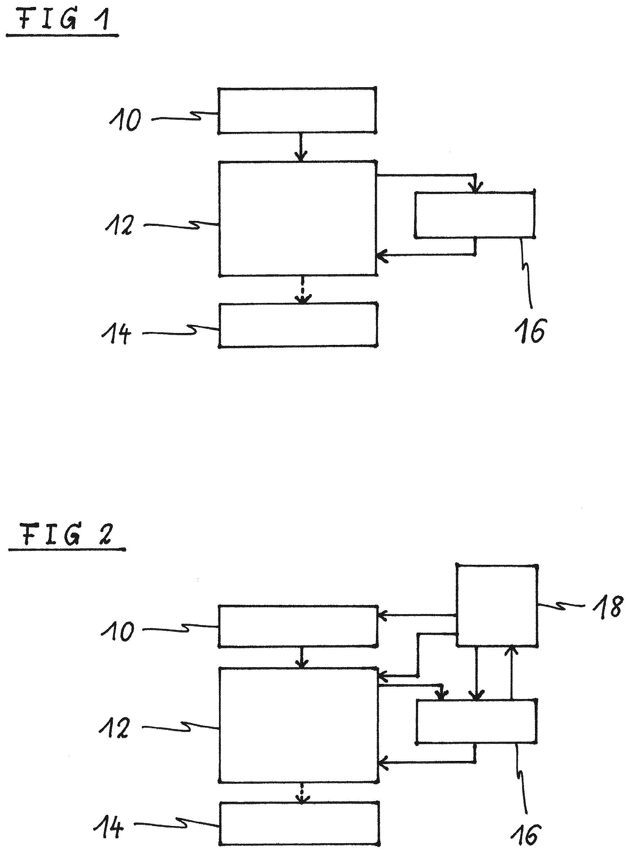

FIG 1 illustrates a schematic flow chart diagram of a washing cycle according to an embodiment of the present invention.

The washing cycle includes a main washing phase 10, a rinsing phase 12 and a final fresh rinsing phase 14. The final fresh rinsing phase 14 is optional. During the rinsing phase 12 a continuous purification 16 is performed.

In contrast, a washing cycle according to the prior art includes two or more subsequent rinsing phases instead of the only rinsing phase 12, wherein each of said two rinsing phases requires fresh water.

The washing cycle according to the present invention uses one or more regenerative adsorbent media for the continuous purification 16 of the rinse water. Preferred adsorbent media include synthetic resins based on cross-linked polystyrene or polyacrylates. Said cross-linked polystyrene or polyacrylates may be either not functionalized or include functional groups, e.g. amine functional groups or other specific chemical groups.

The type of matrix of the adsorbent media influences the porosity and the mechanical resistance of the resin product. The physical form may be in small beads or particles of various dimensions depending on product type and application. The typical range of the diameters of said beads or particles is between 50 µm and 1500 um. These resin products have very large surface areas, which may range from 100 m²/g to 1200 m²/g. The polymer network is functionalized with different groups. The selectivity and adsorption strength is driven by the group function, commonly amine functional groups. On the market various commercial products are available designed for specific applications as food industry, water purification plant, waste water treatment, pharmaceutical industry.

The main property of these synthetic adsorbent media is the chance to restore the functionality by regeneration. Commonly the adsorbent media are hold in a cartridge, preferably of a cylindrical shape, in order to enhance the performances of the resin. The water flow should be in an opposite direction to the gravity, i.e. upwards. The resins are disposed and replaced after a suitable number of regeneration cycles. Preferably, the resins are designed to survive for all the lifetime of the water bearing machine. The resins are regenerated by adding soda or other additives like acetone or alcohols, when the saturation occurs. Solid soda could be added in powder, pellets or single dose tablet. Further, the additives may be provided as liquids. Regenerant substances are soluble in water so as to be easily driven towards the resins for their regeneration. If preferred, a regenerant solution may be formed within the water bearing machine by a regenerant solution producing device, such as an electrochemical device, which may be integrated in the resin cartridge or arranged separately therefrom. The regenerant solution production may be automatic or may require a user intervention.

A level of saturation is managed by the water bearing machine or by settings of the user. For example, the resins may be regenerated after a counter has reached a predetermined amount of water purified by the resins, or after a resin predetermined working time or number of regeneration processes already carried out. As a further example, a resin regeneration process may be started when a control unit receives a predetermined signal from a device able to detect/measure the purity degree of water exiting the resin cartridge. When the purity degree of water output from the resin cartridge falls below a predetermined threshold, it means that the resins have temporary lost their surfactant adsorption properties and a resin regeneration process is needed. A conductimetric sensing device able to detect and/or measure the electric conductivity of water, or a refractometric sensing device able to detect and/or measure the index of refraction of water, or a sensing device able to detect and/or measure the UV-radiation absorbed by water, can be arranged downstream the resin cartridge for determining an index of quality of water purification carried out by the resins.

The application of specific regenerative adsorbents according to the present invention may be provided for water purification and reuse in water bearing machines, for example in washing machines and dishwashers. A purification device is arranged in the recirculation circuit of the washing machine. During the rinsing phase 14, the rinse water will be continuously purified. Contaminants of the water, e.g. surfactants, detergent components, soil coming from laundry, dyes, will be removed up to a suitable level in line with rinsing performance required by the standard.

The flow chart diagram represent the washing cycle layout of a washing machine including a water purifier device of the type previously described applied into the recirculation circuit of the washing machine. The conventional structure of the washing cycle including one main washing phase and two or three rinsing phases is replaced by the main washing phase 10 and the subsequent rinsing phase 12 with the continuous purification 16. The water for the rinsing phase 12 is loaded as usual, but during said rinsing phase 12 the water is continuously purified in order to progressively reduce the level of contaminants during the continuous purification 16. The phase of the continuous purification 16 ends, when the quality of the rinsing phase 12 fits the requirements of the standard.

As mentioned above, the continuous purification 16 is designed to work during the rinsing phase 12. Optionally, the continuous purification 16 may work also in a second part of the main washing phase 10. However, this results in reduced lifetime of the adsorbent media and requires more frequent regeneration operations. The purification phase 16 is preferably avoided in the first part of the main washing phase, since the reduction of detergent concentration would result in lower washing performances.

FIG 2 illustrates a schematic flow chart diagram of a washing cycle according to a further embodiment of the present invention further. The washing cycle in FIG 2 is similar as the washing cycle of FIG 1.

The washing cycle includes the main washing phase 10, the rinsing phase 12 and the optional final fresh rinsing phase 14. The continuous purification 16 is performed during the rinsing phase 12. Additionally, the washing cycle includes the use of a storage tank 18. The use of the storage tank 18 is an option and offers the additional opportunity to use the stored purified water on the next washing cycle during washing and/or rinsing operations. After a certain number of washing cycles, the adsorbent media will be saturated by the contaminants removed from the water. A special regeneration phase will then be performed. The adsorbent media will be eluted by a regenerant solution, e.g. soda or alcoholic solution. The user may be asked to introduce the regenerant solution into a dedicated compartment of a detergent drawer by means, for example, of an indication in a display or other visual and/or acoustic alert. Said regenerant may be provided as liquid, powder or tablets. Advantageously, the regenerant is soluble in water.

The continuous purification 16 is done until the quality of the rinse is in line with the rinsing performance required by the standard. The use of the storage tank 18 supports the purification process as a buffer within the same washing cycle. Alternatively, at the end of the rinsing phase 12 the purified water could be stored in the storage tank 18 to be used in subsequent washing cycles, either in the main washing phase 10 or in the rinsing phase 12.

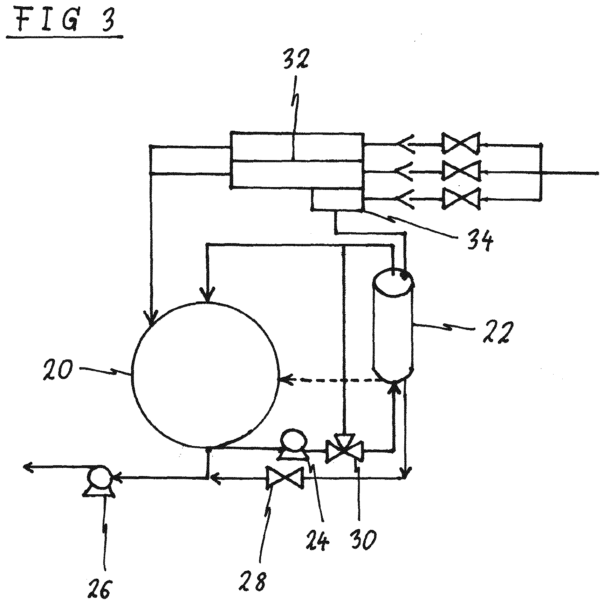

FIG 3 illustrates a schematic circuit diagram of a washing machine according to a first embodiment of the present invention.

The washing machine includes a washing tub 20, a resin cartridge 22, a recirculation pump 24, a drain pump 26, a valve 28, a two-ways valve 30, a detergent drawer 32 and a regeneration solution container 34. The detergent drawer 32 is connected to the washing tub 20, so that detergent can be delivered from the detergent drawer 32 to the washing tub 20. An outlet of the washing tub 20 is connected to a drain via the drain pump 26. The regeneration solution container 34 is in fluid communication with the resin cartridge 22, which is further connected to a drain via the drain pump 26

The washing tub 20, the resin cartridge 22, the recirculation pump 24 and the two-ways valve 30 form a recirculation circuit. The resin cartridge 22 is bypassed by a bypass pipe arranged in parallel to said resin cartridge 22, wherein the two-ways valve 30 switches between the resin cartridge 22 and the parallel bypass pipe. The recirculation circuit is driven by the recirculation pump 24.

In this example, the resin cartridge 22 is arranged within the traditional recirculation circuit that ordinarily, i.e. in a known manner, recirculates liquids through the washing tub 20. The bypass pipe avoids recirculation with purification during the initial part of the main washing phase10. This would reduce the concentration of the detergent and consequently the washing performance.

Alternatively, the resin cartridge 22 may be arranged in a dedicated recirculation circuit. In this case, the conventional recirculation of the washing machine is maintained, and an additional circuit is added in order to switch between said conventional recirculation and recirculation with purification.

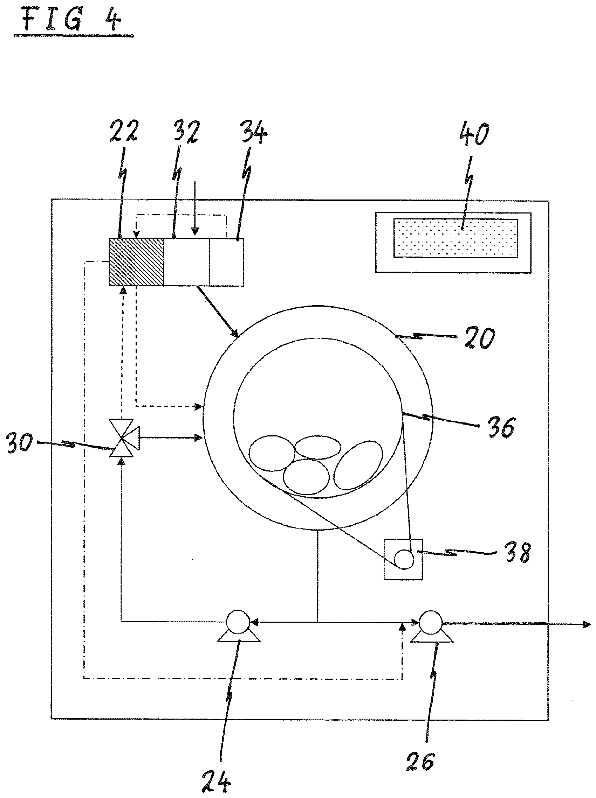

FIG 4 illustrates a schematic circuit diagram of a washing machine according to a second embodiment of the present invention. The washing machine of the second embodiment is provided for the continuous water purification.

The washing machine includes the washing tub 20, the resin cartridge 22, the recirculation pump 24, the drain pump 26, the two-ways valve 30, the detergent drawer 32 and the regeneration solution container 34. The resin cartridge 22, the detergent drawer 32 and the regeneration solution container 34 are arranged side-by-side in a top portion of the washing machine. A laundry drum 36 is arranged inside the washing tub 20. The laundry drum is driven by a motor 38. A control panel 40 is arranged in the top portion of the washing machine.

The detergent drawer 32 is connected to the washing tub 20, so that detergent, mixed with water, can be delivered from the detergent drawer 32 to the washing tub 20. In a similar way, the regeneration solution container 34 is connected to the resin cartridge 22, so that regeneration solution can be delivered from the regeneration solution container 34 to the resin cartridge 22. The outlet of the washing tub 20 is connected via the drain pump 26 to the drain.

The washing tub 20, the resin cartridge 22, the recirculation pump 24 and the two-ways valve 30 form the recirculation circuit, wherein the recirculation circuit is driven by the recirculation pump 24. The two-ways valve 30 connects the recirculation circuit to an inlet of the resin cartridge 22. An outlet of the resin cartridge 22 is connected to the washing tub 20. An inlet of the two-ways valve 30 is connected to the recirculation pump 24, while two outlets of the two-ways valve 30 are connected to the washing tub 20 and resin cartridge 22, respectively. A further outlet of the resin cartridge 22 is connected to an inlet of the drain pump 26 for exhausting regenerating liquor from the machine after resin regeneration has been completed.

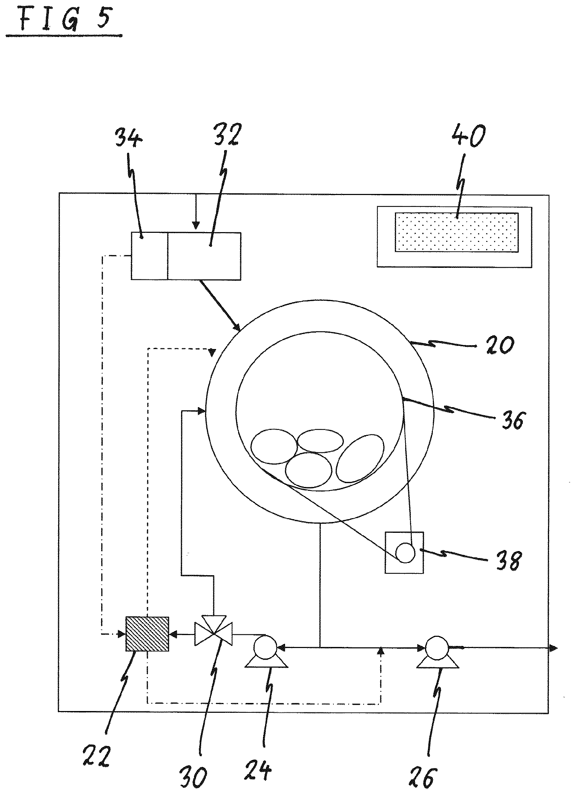

FIG 5 illustrates a schematic circuit diagram of a washing machine according to a third embodiment of the present invention. The washing machine of the third embodiment is also provided for the continuous water purification.

The washing machine includes the washing tub 20, the resin cartridge 22, the recirculation pump 24, the drain pump 26, the two-ways valve 30, the detergent drawer 32 and the regeneration solution container 34. The resin cartridge 22 is arranged in the bottom of the washing machine. In contrast, the detergent drawer 32 and the regeneration solution container 34 are arranged side-by-side in the top portion of the washing machine. The laundry drum 36 is arranged inside the washing tub 20 and driven by the motor 38. The control panel 40 is arranged in the top portion of the washing machine.

The detergent drawer 32 is directly connected to the washing tub 20, so that detergent, mixed with waer, can be delivered from the detergent drawer 32 to the washing tub 20. Further, the regeneration solution container 34 is connected to the resin cartridge 22, so that regeneration solution can be delivered from the regeneration solution container 34 to the resin cartridge 22. The outlet of the washing tub 20 is connected via the drain pump 26 to the drain.

The washing tub 20, the resin cartridge 22, the recirculation pump 24 and the two-ways valve 30 form the recirculation circuit, wherein the recirculation circuit is driven by the recirculation pump 24. The two-ways valve 30 connects the recirculation circuit to the inlet of the resin cartridge 22. The outlet of the resin cartridge 22 is connected to the washing tub 20. The inlet of the two-ways valve 30 is connected to the recirculation pump 24, while the two outlets of the two-ways valve 30 are connected to the washing tub 20 and resin cartridge 22, respectively. The further outlet of the resin cartridge 22 is connected to the inlet of the drain pump 26.

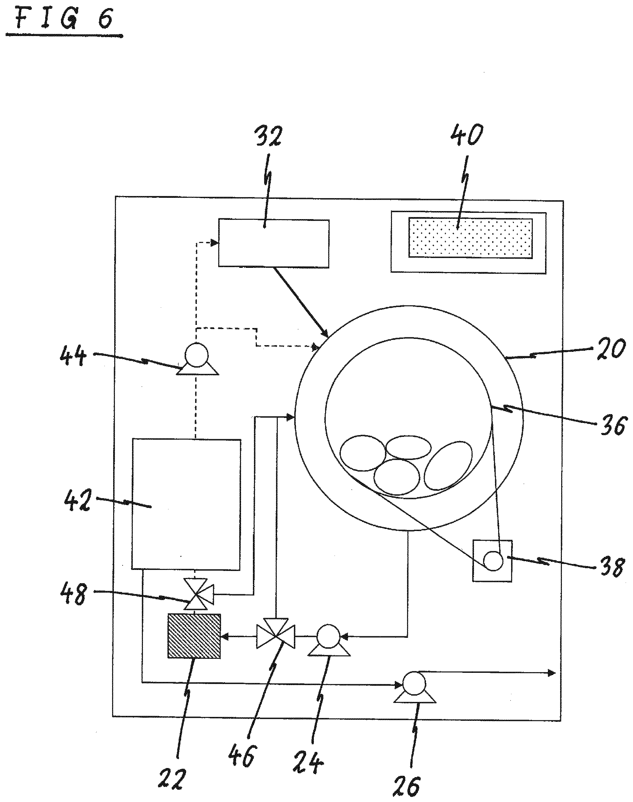

FIG 6 illustrates a schematic circuit diagram of a washing machine according to a fourth embodiment of the present invention. The washing machine of the fourth embodiment is also provided for a time deferred use of purified water and the continuous water purification.

The washing machine includes the washing tub 20, the resin cartridge 22, the recirculation pump 24, the drain pump 26, the two-ways valve 30, the detergent drawer 32 and a water storage tank 42. The resin cartridge 22 is arranged in the bottom of the washing machine. The detergent drawer 32 is arranged in the top portion of the washing machine. The water storage tank 42 is arranged between the detergent drawer 32 and the resin cartridge 22. The laundry drum 36 is arranged inside the washing tub 20 and driven by the motor 38. The control panel 40 is arranged in the top portion of the washing machine.

The detergent drawer 32 is directly connected to the washing tub 20, so that the detergent, mixed with water, can be delivered from the detergent drawer 32 to the washing tub 20. An outlet of the water storage tank 42 is connected to the detergent drawer 32 via a tank pump 44, so that purified water can be delivered from the water storage tank 42 to the detergent drawer 32. If preferred, an outlet of the water storage tank 42 may be connected to the washing tub 20 via the tank pump 44, so that purified water can be delivered from the water storage tank 42 to the washing tub 20 without passing through the detergent drawer 32 Another outlet of the water storage tank 42 is connected to the drain pump 26.

The outlet of the washing tub 20 is connected via the drain pump 26 to the drain. The washing tub 20, the resin cartridge 22, the recirculation pump 24, a first two-ways valve 46 and a second two-ways valve 48 form the recirculation circuit. The recirculation circuit is driven by the recirculation pump 24. The first two-ways valve 46 connects the recirculation pump 24 to the inlet of the resin cartridge 22 and to an inlet of the washing tub 20. The inlet of the first two-ways valve 46 is connected to the recirculation pump 24, while the two outlets of the first two-ways valve 46 are connected to the washing tub 20 and resin cartridge 22, respectively. Thus, water drained from the washing tub 20 may be recirculated through the tub 20, or delivered to the resin cartridge 22 for being purified. The second two-ways valve 48 connects the outlet of the resin cartridge to inlets of the washing tub 20 and water storage tank 42, respectively. Thus, the purified water may be delivered either directly into the washing tub 20 or into the water storage tank 42. In the latter case, the purified water can be deferred delivered to the detergent drawer 32.

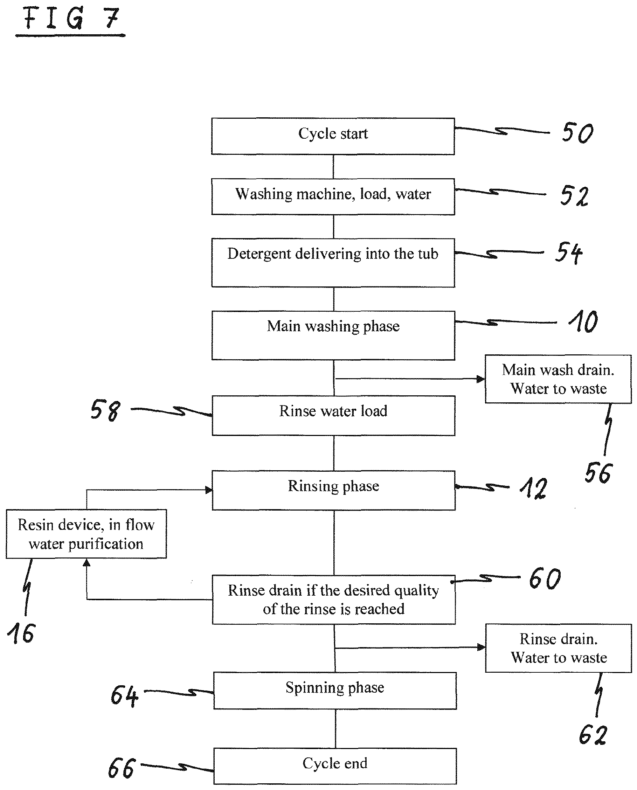

FIG 7 illustrates a detailed flow chart diagram of a washing cycle according to a first embodiment of the present invention.

In a first step 50 the washing cycle is started. In a second step 52 the washing machine is loaded with water taken, for example, from the public water net. As a next step 54 the detergent is delivered into the washing tub 20. Then the main washing phase 10 is performed. In a subsequent step 56, the water from the main washing phase 10 is delivered to the drain.

As a next step 58, the rinse water is loaded. Then the rinsing phase 12 is performed. In a step 60 a desired quality of the laundry rinse is checked. If the desired quality of the rinse has not yet been reached, then the rinse water is continuously purified in step 16 by the resin device during the rinsing phase. If the desired quality of the rinse has been reached, then the rinse water is delivered to the drain in a step 62. As a further step 64 the spinning phase is performed to remove water from laundry. As a last step 66 the washing cycle ends. In case a desired quality of the rinse cannot be reached, one or more rinsing phases may be carried out using fresh water.

The laundry rinse quality can be checked by monitoring the quality of liquor used for rinsing. Quality of such liquor may be checked through many different methods. A basic method may consist in counting the liquor purification time, i.e. the time spent for treating the liquor through the resin device. Based on the counted time a control unit may determine an index of quality of the rinsing liquor. For estimating the liquor quality based on purification treatment time, the control unit may further taking into account the status of the resins within the resin device such as their overall service age, the number of regeneration operations performed on them, the time passed from the last regeneration operation performed on them and so on. Alternatively, the quality of rinsing liquor may be determined using a conductimetric sensing device able to detect and/or measure the electric conductivity of such liquor, or by a refractometric sensing device able to detect and/or measure the index of refraction of the liquor, or a sensing device able to detect and/or measure the UV-radiation absorbed by the rinsing liquor. Further devices able to output a signal indicative of the liquor purity degree are suitable for the present scope. Based on the detection/measurement output from the quality detection device(s) disclosed above, a control unit may determine an index of quality of the rinsing liquor.

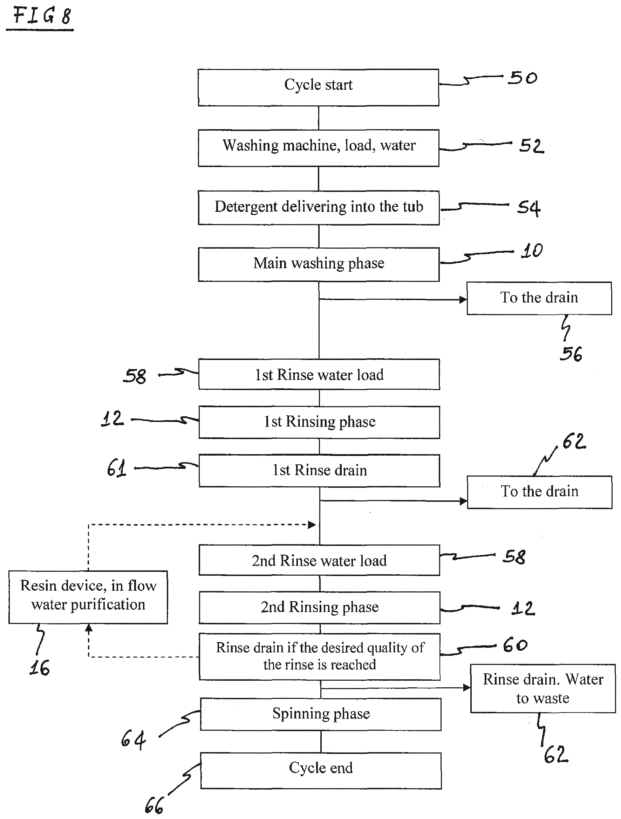

FIG 8 illustrates a detailed flow chart diagram of a washing cycle according to a second embodiment of the present invention.

In the first step 50 the washing cycle is started. In the second step 52 the washing machine is loaded with water taken, for example, from the public water net. During the next step 54 the detergent is delivered into the washing tub 20. Then the main washing phase 10 is performed. In the subsequent step 56, the water from the main washing phase 10 is delivered to the drain.

As the next step 58, first rinse water is loaded. Then a first rinsing phase 12 is performed. In steps 61 and 62 water used for the first rinsing phase is, respectively, drained from the washing tub 20 and wasted. In this way a huge amount of detergent is removed from laundry and exhausted through the drain outside the machine. Second rinse water taken, for example, from the public water net, is loaded during a repetition of step 58. A second rinsing phase 12 is performed. In the step 60 the quality of the second rinse is checked. If the desired quality of the rinse has not yet been reached, then the second rinse water is continuously purified in step 16 by the resin device. If the desired quality of the rinse has been reached, then the second rinse water is delivered to the drain. As next further step 64 the spinning phase is performed to remove water from laundry. As the last step 66 the washing cycle ends.

According to the second embodiment of a washing cycle of the invention, an improved duration or the resin cartridge 22 may be obtained compared to the first embodiment of the washing cycle described above because less impure water is recirculated through the resin device.

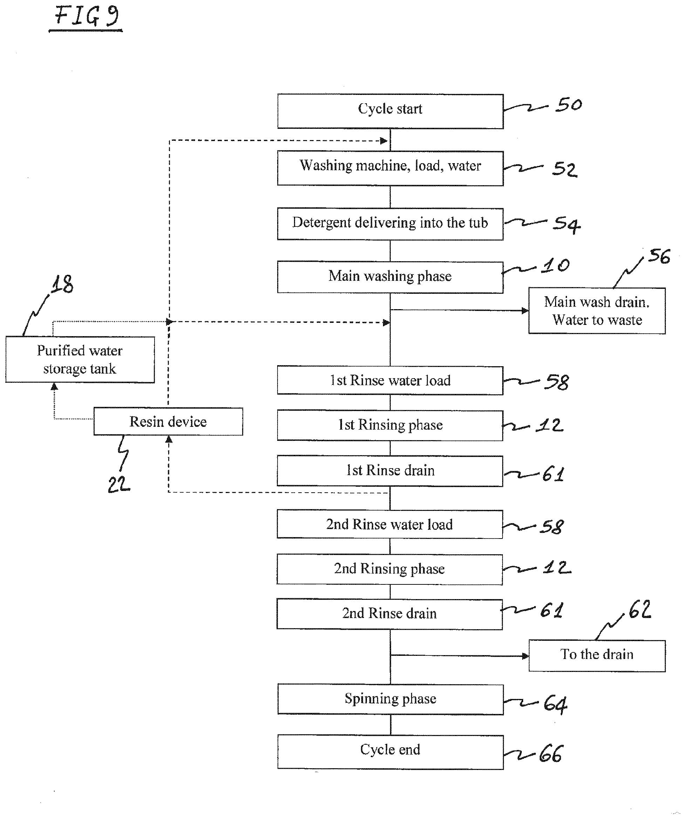

FIG 9 illustrates a detailed flow chart diagram of a washing cycle according to a third embodiment of the present invention.

The washing cycle is started in the first step 50. In the second step 52 the washing machine is loaded with water taken, for example, from the public water net. The detergent is delivered into the washing tub 20 during the next step 54. Then the main washing phase 10 is performed. In the subsequent step 56, the water from the main washing phase 10 is delivered to the drain.

As the next step 58, the first rinse water is loaded. Then the first rinsing phase 12 is performed. In the step 61 the rinse water is drained from the washing tub 20 and delivered to the resin cartridge 22 for being purified. Then, at step 18, purified water is delivered to the purified water storage tank 42 for being used, at least in part, in a main washing phase or a rinsing phase of a subsequent washing cycle. Optionally, water stored in the water storage tank 42 may be used at least in part as a water source for a further rinsing phase following the first one, in the same washing cycle.

Second rinse water is loaded entirely from the public water net or the water storage tank 42 during a repetition of step 58. If preferred, second rinse water is loaded partly from the public water net and partly from the water storage tank 42. A second rinsing phase 12 is performed. The step 61 is repeated and the rinse water is delivered to the drain at step 62. If preferred, more than one second rinsing phase may be carried out, and if not yet used in the second rinsing phase, purified water stored in the tank 42 may be used, at least in part, in one of the rinsing phases following the second one. As next further step 64 the spinning phase is performed to remove water from laundry. As the last step 66 the washing cycle ends.

If preferred, after the end of the main washing phase 10, a first rinsing phase 12 may be carried out using water taken from the public water net and such water can be drained in a step 61 and wasted at the end of the first rinsing phase. A further rinsing phase 58, subsequent to the first one, may be carried out using new water taken from the public water net. Then, in a further step 61, the rinse water is drained from the washing tub 20 and delivered to the resin cartridge 22 for being purified. Then, in a step 18, purified water is delivered to the purified water storage tank 42 for being used, at least in part, in a main washing phase or a rinsing phase of a subsequent washing cycle.

As shown in Figure 9, the third embodiment of the present invention can be arranged for optionally carrying out a continuous purification of water used for a rinsing phase as described with reference to first and second embodiment of the invention shown in Figures 7 and 8. In the third embodiment, the continuous purification of water may be carried out in combination with the storage of purified water in the tank 42 or as an alternative thereto.

Although illustrative embodiments of the present invention have been described herein with reference to the accompanying drawings, it is to be understood that the present invention is not limited to those precise embodiments, and that various other changes and modifications may be affected therein by one skilled in the art without departing from the scope of the invention as claimed. All such changes and modifications are intended to be included within the scope of the invention as defined by the appended claims.

### List of reference numerals

- 10: main washing phase
- 12: rinsing phase
- 14: final fresh rinsing phase
- 16: continuous purification
- 18: use of storage tank
- 20: washing tub
- 22: resin cartridge
- 24: recirculation pump
- 26: drain pump
- 28: valve
- 30: two-ways valve
- 32: detergent drawer
- 34: regeneration solution container
- 36: laundry drum
- 38: motor
- 40: control panel
- 42: water storage tank
- 44: tank pump
- 46: first two-ways valve
- 48: second two-ways valve
- 50: cycle start
- 52: loading the washing machine
- 54: delivering detergent into washing tub
- 56: delivering main wash water to drain
- 58: loading of rinse water
- 60: checking rinse quality
- 61: rinse drain
- 62: delivering rinse water to drain
- 64: spinning phase
- 66: cycle end

## Claims

1. A method for reusing water in a water bearing machine, in particular a laundry treating machine or dishwasher, wherein said method comprises the step of a surfactant adsorption treatment (16) of the water by at least one adsorbent medium (22) during a recirculation of the water, so that contaminants of the water are adsorbed by the at least one adsorbent medium (22), and wherein a regeneration phase is performed after a time period, in which regeneration phase the at least one adsorbent medium (22) is regenerated by a regenerant solution (34),
wherein the adsorbent medium (22) includes at least one synthetic resin of a polymeric type,
wherein the network of the synthetic resin is provided with at least one functional chemical group,
wherein the network of the synthetic resin is provided with at least one amine functional group,
wherein the laundry treating machine comprises a recirculation circuit for said recirculation of the water comprising a washing tub (20), a resin cartridge (22), a recirculation pump (24) and a two-ways valve (30), wherein the recirculation circuit is driven by the recirculation pump (24),
wherein the resin cartridge (22) is bypassed by a bypass pipe arranged in parallel to said resin cartridge (22), wherein the two-ways valve (30) switches between the resin cartridge (22) and the parallel bypass pipe, and
wherein the adsorbent medium (22) is in the resin cartridge (22),
**characterized in that**
the surfactant adsorption treatment (16) is applied to rinse water of the laundry treating machine, wherein the rinse water is continuously purified during a rinsing phase (14).

2. The method according to claim 1,
**characterized in that**
the synthetic resin bases on cross-linked polystyrene and/or cross-linked polyacrylates.

3. The method according to any one of the preceding claims,
**characterized in that**
the regenerant solution includes a soda solution, an acetone solution and/or an alcoholic solution.

4. The method according to any one of the preceding claims,
**characterized in that**
at least a part of the treated water is stored or buffered (18) after the surfactant adsorption treatment.

5. A water bearing machine, in particular a laundry treating machine or dishwasher, comprising a recirculation circuit with a surfactant adsorption treatment device (22) for treating water by at least one adsorbent medium during a recirculation of the water, so that contaminants of the water are adsorbed by the at least one adsorbent medium, and a regeneration device (34) for regenerating the adsorbent medium (22) by a regenerant solution (34) after a time period,
wherein the adsorbent medium (22) includes at least one synthetic resin of a polymeric type,
wherein the network of the synthetic resin is provided with at least one functional chemical group,
wherein the network of the synthetic resin is provided with at least one amine functional group,
wherein the recirculation circuit for said recirculation of the water comprises a washing tub (20), a resin cartridge (22), a recirculation pump (24) and a two-ways valve (30), wherein the recirculation circuit is driven by the recirculation pump (24),
wherein the resin cartridge (22) is bypassed by a bypass pipe arranged in parallel to said resin cartridge (22), wherein the two-ways valve (30) is adapted to switch between the resin cartridge (22) and the parallel bypass pipe, and
wherein the adsorbent medium (22) is in the resin cartridge (22),
**characterized in that**
the recirculation circuit with the surfactant adsorption treatment device (22) is provided for rinse water, wherein the rinse water is continuously purified during a rinsing phase (14),
wherein an outlet of the washing tub (20) is connected via a drain pump (26) to a drain.

6. The water bearing machine according to claim 5,
**characterized in that**
the synthetic resin bases on cross-linked polystyrene and/or cross-linked polyacrylates.

7. The water bearing machine according to any one of the claims 5 or 6,
**characterized in that**
the regenerant solution includes a soda solution, an acetone solution and/or an alcoholic solution.

8. The water bearing machine according to any one of the claims 5 to 7,
**characterized in that**
the water bearing machine comprises a water storage tank (42) for storing or buffering the water treated by the surfactant adsorption treatment device (22).

9. The water bearing machine according to any one of the claims 5 to 8,
**characterized in that**
the recirculation circuit includes at least one two-ways valve (30; 46) for bypassing the surfactant adsorption treatment device (22) and/or at least one further two-ways valve (48) for bypassing the water storage tank (42).

10. A computer program product stored on a computer usable medium, comprising computer readable program means for causing a computer to perform a method according to any one of the claims 1 to 4 in a water bearing machine according to one of the claims 5 to 9.

## Patentansprüche

1. Verfahren zum Wiederverwenden von Wasser in einer wasserführenden Maschine, insbesondere einer Wäschebehandlungsmaschine oder einem Geschirrspüler, wobei das Verfahren den Schritt einer Tensidadsorptionsbehandlung (16) des Wassers durch mindestens ein adsorbierendes Medium (22) während einer Umwälzung des Wassers umfasst, sodass Schmutzstoffe des Wassers durch das mindestens eine adsorbierende Medium (22) adsorbiert werden, und wobei nach einer Zeitspanne eine Regenerationsphase durchgeführt wird, wobei in der Regenerationsphase das mindestens eine adsorbierende Medium (22) durch eine Regenerierungsmittellösung (34) regeneriert wird,
wobei das adsorbierende Medium (22) mindestens ein synthetisches Harz polymerer Art beinhaltet,
wobei das Netzwerk des synthetischen Harzes mit mindestens einer funktionalen Gruppe versehen ist,
wobei das Netzwerk des synthetischen Harzes mit mindestens einer funktionalen Amin-Gruppe versehen ist,
wobei die Wäschebehandlungsmaschine einen Umwälzkreis für die Umwälzung des Wassers umfasst, umfassend eine Wäschetrommel (20), eine Harzkartusche (22), eine Umwälzpumpe (24) und ein Zweiwegeventil (30), wobei der Umwälzkreis durch die Umwälzpumpe (24) angetrieben wird,
wobei die Harzkartusche (22) von einer Umgehungsleitung umgangen wird, die parallel zu der Harzkartusche (22) angeordnet ist, wobei das Zweiwegeventil (30) zwischen der Harzkartusche (22) und der parallelen Umgehungsleitung umschaltet, und
wobei sich das adsorbierende Medium (22) in der Harzkartusche (22) befindet,
**dadurch gekennzeichnet, dass**
die Tensidadsorptionsbehandlung (16) auf Spülwasser der Wäschebehandlungsmaschine angewendet wird, wobei das Spülwasser während einer Spülphase (14) kontinuierlich gereinigt wird.

2. Verfahren nach Anspruch 1,
**dadurch gekennzeichnet, dass**
das synthetische Harz auf vernetztem Polystyrol und/oder vernetzten Polyacrylaten basiert.

3. Verfahren nach einem der vorhergehenden Ansprüche,
**dadurch gekennzeichnet, dass**
die Regenerierungsmittellösung (34) eine Sodalösung, eine Acetonlösung und/oder eine alkoholische Lösung beinhaltet.

4. Verfahren nach einem der vorhergehenden Ansprüche,
**dadurch gekennzeichnet, dass**
mindestens ein Teil des behandelten Wassers nach der Tensidadsorptionsbehandlung gespeichert oder zwischengespeichert (18) wird.

5. Wasserführende Maschine, insbesondere eine Wäschebehandlungsmaschine oder ein Geschirrspüler, umfassend einen Umwälzkreis mit einer Tensidadsorptions-Behandlungsvorrichtung (22) zum Behandeln von Wasser mit mindestens einem adsorbierenden Medium während einer Umwälzung des Wassers, sodass Schmutzstoffe des Wassers durch das mindestens eine adsorbierende Medium adsorbiert werden, und eine Regerationsvorrichtung (34) zum Regenerieren des adsorbierenden Mediums (22) durch eine Regenerierungsmittellösung (34) nach einer Zeitspanne,
wobei das adsorbierende Medium (22) mindestens ein synthetisches Harz polymerer Art beinhaltet,
wobei das Netzwerk des synthetischen Harzes mit mindestens einer funktionalen Gruppe versehen ist,
wobei das Netzwerk des synthetischen Harzes mit mindestens einer funktionalen Amin-Gruppe versehen ist,
wobei der Umwälzkreis für die Umwälzung des Wassers eine Wäschetrommel (20), eine Harzkartusche (22), eine Umwälzpumpe (24) und ein Zweiwegeventil (30) umfasst, wobei der Umwälzkreis durch die Umwälzpumpe (24) angetrieben wird,
wobei die Harzkartusche (22) von einer Umgehungsleitung umgangen wird, die parallel zu der Harzkartusche (22) angeordnet ist, wobei das Zweiwegeventil (30) dafür eingerichtet ist, zwischen der Harzkartusche (22) und der parallelen Umgehungsleitung umzuschalten, und
wobei sich das adsorbierende Medium (22) in der Harzkartusche (22) befindet,
**dadurch gekennzeichnet, dass**
der Umwälzkreis mit der Tensidadsorptions-Behandlungsvorrichtung (16) für Spülwasser bereitgestellt ist, wobei das Spülwasser während einer Spülphase (14) kontinuierlich gereinigt wird,
wobei ein Auslass der Waschtrommel (20) über eine Ablaufpumpe (26) mit einem Ablauf verbunden ist.

6. Wasserführende Maschine nach Anspruch 5,
**dadurch gekennzeichnet, dass**
das synthetische Harz auf vernetztem Polystyrol und/oder vernetzten Polyacrylaten basiert.

7. Wasserführende Maschine nach einem der Ansprüche 5 oder 6,
**dadurch gekennzeichnet, dass**
die Regenerierungsmittellösung eine Sodalösung, eine Acetonlösung und/oder eine alkoholische Lösung beinhaltet.

8. Wasserführende Maschine nach einem der Ansprüche 5 bis 7,
**dadurch gekennzeichnet, dass**
die wasserführende Maschine einen Wasserspeichertank (42) zum Speichern oder Zwischenspeichern (18) des durch die Tensidadsorptions-Behandlungsvorrichtung (22) behandelten Wassers umfasst.

9. Wasserführende Maschine nach einem der Ansprüche 5 bis 8,
**dadurch gekennzeichnet, dass**
der Umwälzkreis mindestens ein Zweiwegeventil (30, 46) zum Umgehen der Tensidadsorptions-Behandlungsvorrichtung (22) und/oder mindestens ein weiteres Zweiwegeventil (48) zum Umgehen des Wasserspeichertanks (42) umfasst.

10. Computerprogrammprodukt, das auf einem computernutzbaren Medium gespeichert ist, umfassend computerlesbare Programmmittel zum Veranlassen eines Computers, ein Verfahren nach einem der Ansprüche 1 bis 4 in einer wasserführenden Maschine nach einem der Ansprüche 5 bis 9 durchzuführen.

## Revendications

1. Procédé de réutilisation d'eau dans une machine contenant de l'eau, en particulier une machine de traitement de linge ou un lave-vaisselle, ledit procédé comportant l'étape d'un traitement (16) d'adsorption de tensioactif de l'eau par au moins un milieu adsorbant (22) pendant une recirculation de l'eau, de sorte que des contaminants de l'eau sont adsorbés par le ou les milieux adsorbants (22), et une phase de régénération étant effectuée après un laps de temps, le ou les milieux adsorbants (22) étant régénérés par une solution régénérante (34) lors de ladite phase de régénération,
le milieu adsorbant (22) comprenant au moins une résine synthétique d'un type polymérique,
le réseau de la résine synthétique étant muni d'au moins un groupe chimique fonctionnel,
le réseau de la résine synthétique étant muni d'au moins un groupe fonctionnel amine,
la machine de traitement de linge comportant un circuit de recirculation qui sert à ladite recirculation de l'eau, comportant une cuve (20) de lavage, une cartouche (22) de résine, une pompe (24) de recirculation et un robinet (30) à deux voies, le circuit de recirculation étant mis en mouvement par la pompe (24) de recirculation,
la cartouche (22) de résine étant contournée par un tuyau de dérivation disposé parallèlement à ladite cartouche (22) de résine, le robinet (30) à deux voies basculant entre la cartouche (22) de résine et le tuyau parallèle de dérivation, et
le milieu adsorbant (22) se trouvant dans la cartouche (22) de résine,
**caractérisé en ce que**
le traitement (16) d'adsorption de tensioactif est appliqué à de l'eau de rinçage de la machine de traitement de linge, l'eau de rinçage étant purifiée en continu pendant une phase (14) de rinçage.

2. Procédé selon la revendication 1,
**caractérisé en ce que**
la résine synthétique est à base de polystyrène réticulé et/ou de polyacrylates réticulés.

3. Procédé selon l'une quelconque des revendications précédentes,
**caractérisé en ce que**
la solution régénérante comprend une solution de soude, une solution d'acétone et/ou une solution alcoolique.

4. Procédé selon l'une quelconque des revendications précédentes,
**caractérisé en ce que**
au moins une partie de l'eau traitée est stockée ou gardée en réserve (18) après le traitement d'adsorption de tensioactif.

5. Machine contenant de l'eau, en particulier une machine de traitement de linge ou un lave-vaisselle, comportant un circuit de recirculation doté d'un dispositif (22) de traitement d'adsorption de tensioactif servant à faire traiter de l'eau par au moins un milieu adsorbant pendant une recirculation de l'eau, de sorte que des contaminants de l'eau sont adsorbés par le ou les milieux adsorbants, et un dispositif (34) de régénération servant à régénérer le milieu adsorbant (22) par une solution régénérante (34) après un laps de temps,
le milieu adsorbant (22) comprenant au moins une résine synthétique d'un type polymérique,
le réseau de la résine synthétique étant muni d'au moins un groupe chimique fonctionnel,
le réseau de la résine synthétique étant muni d'au moins un groupe fonctionnel amine,
le circuit de recirculation qui sert à ladite recirculation de l'eau comportant une cuve (20) de lavage, une cartouche (22) de résine, une pompe (24) de recirculation et un robinet (30) à deux voies, le circuit de recirculation étant mis en mouvement par la pompe (24) de recirculation,
la cartouche (22) de résine étant contournée par un tuyau de dérivation disposé parallèlement à ladite cartouche (22) de résine, le robinet (30) à deux voies étant prévu pour basculer entre la cartouche (22) de résine et le tuyau parallèle de dérivation,
et le milieu adsorbant (22) se trouvant dans la cartouche (22) de résine,
**caractérisée en ce que**
le circuit de recirculation doté du dispositif (22) de traitement d'adsorption de tensioactif est mis en place pour l'eau de rinçage, l'eau de rinçage étant purifiée en continu pendant une phase (14) de rinçage,
une sortie de la cuve (20) de lavage étant reliée via une pompe (26) de vidange à une évacuation.

6. Machine contenant de l'eau selon la revendication 5,
**caractérisée en ce que**
la résine synthétique est à base de polystyrène réticulé et/ou de polyacrylates réticulés.

7. Machine contenant de l'eau selon l'une quelconque des revendications 5 ou 6,
**caractérisée en ce que**
la solution régénérante comprend une solution de soude, une solution d'acétone et/ou une solution alcoolique.

8. Machine contenant de l'eau selon l'une quelconque des revendications 5 à 7,
**caractérisée en ce que**
la machine contenant de l'eau comporte un réservoir (42) de stockage d'eau servant à stocker ou à garder en réserve l'eau traitée par le dispositif (22) de traitement d'adsorption de tensioactif.

9. Machine contenant de l'eau selon l'une quelconque des revendications 5 à 8,
**caractérisée en ce que**
le circuit de recirculation comprend au moins un robinet (30 ; 46) à deux voies servant à contourner le dispositif (22) de traitement d'adsorption de tensioactif et/ou au moins un robinet (48) à deux voies supplémentaire servant à contourner le réservoir (42) de stockage d'eau.

10. Produit de programme d'ordinateur stocké sur un support utilisable par ordinateur, comportant des moyens de programme lisibles par ordinateur servant à amener un ordinateur à réaliser un procédé selon l'une quelconque des revendications 1 à 4 dans une machine contenant de l'eau selon l'une des revendications 5 à 9.
